Europäisches Patentamt

European Patent Office

Office européen des brevets

(11) Veröffentlichungsnummer: **0 375 652**
**A1**

## EUROPÄISCHE PATENTANMELDUNG

(21) Anmeldenummer: 89890289.5

(22) Anmeldetag: 02.11.89

(51) Int. Cl.5 **A01G 9/14**

(30) Priorität: 16.12.88 AT 3072/88

(43) Veröffentlichungstag der Anmeldung:
27.06.90 Patentblatt 90/26

(84) Benannte Vertragsstaaten:
CH DE LI NL

(71) Anmelder: **Austria Metall Aktiengesellschaft**

**A-5282 Braunau am Inn(AT)**

(72) Erfinder: **Trinkl, Werner**
**Rainerstrasse 52**
**A-5280 Braunau(AT)**

(74) Vertreter: **Hain, Leonhard, Dipl.-Ing.**
**Tal 18/IV**
**D-8000 München 2(DE)**

(54) Befestigung für Planen oder Folien an Hallen, insbesondere Gewächshäusern.

(57) Befestigung für Planen oder Folien an Hallen, insbesondere Gewächshäusern, wobei zwischen parallel nebeneinander liegenden Planen oder Folien (5) ein Verbindungsprofil (1) angeordnet ist, das die zueinander weisenden, mit Verdickungen (8) versehenen Ränder dieser Folien oder Planen umfaßt und an der Außenseite eines Profiles (2) der Tragwerkskonstruktion, für die Planen oder Folien oder an einem an diesem Profil angeordneten Profil befestigt ist.

Fig.1

EP 0 375 652 A1

## Befestigung für Planen oder Folien an Hallen, insbesondere Gewächshäusern

In den letzten Jahren wurde als Eindeckung für Gewächshäuser immer häufiger Kunststoff-Folie oder lichtdurchlässige Plane verwendet. Die Vorteile dieser Bauweise sind schnelle Montage und eine einfache, leichte Montage. Zur Befestigung der Planen oder Folien an den Profilen des Tragwerkes sind zwei Alternativen üblich.

Die Planen oder Folien werden entweder an der Oberseite des Tragwerkes mittels Schrauben und Klemmleisten befestigt oder zwischen den Tragwerksprofilen feldweise angebracht, wobei aber die Oberseite des Profiles von der Plane unbedeckt ist.

Bei der Befestigung durch Schrauben und Klemmleisten am Profil des Tragwerkes muß die Folie durchbohrt werden, wodurch wieder eine eigene Abdichtung nötig wird und bei Austausch der Folie die Löcher erst vor Ort gebohrt werden können, da sonst Paßungenauigkeiten der Fall sind. Ebenfalls ist ein teilweises Austauschen einer Folie nicht möglich.

Bei Befestigung zwischen den Tragwerksprofilen sind diese unbedeckt und sowohl der Witterung ausgesetzt, als auch bei Verwendung hochisolierender Folien eine Wärmebrücke. Vorteilhaft bei dieser Konstruktion ist jedoch, daß die Folie feldweise erneuert werden kann.

Um die Vorteile dieser Bauweisen zu nutzen, aber ihre Nachteile zu vermeiden, wird erfindungsgemäß so vorgegangen, daß zwischen parallel nebeneinander liegenden Planen oder Folien ein Verbindungsprofil angeordnet ist, das die zueinander weisenden, mit Verdickungen versehenen Ränder, dieser Folien oder Planen umfaßt und an der Außenseite eines Profiles der Tragwerkskonstruktion, für die Planen oder Folien, oder an einem an diesem Profil angeordneten Profil und das mit diesem kooperierende Verbindungsprofil in ihrer Längserstreckung hintergreifend verhaken.

Somit ist das Profil des Tragwerks durch das Verbindungsprofil bzw. die Folien oder Planen bedeckt. Durch Wahl des Materials des Verbindungsprofils kann eine gute Wärmeisolation erreicht werden. Die Plane kann zwischen zwei Profilen des Tragwerks ausgetauscht werden und eine Demontage des Verbindungsprofils ist hierfür unnötig. Die Verdickung der Plane kann durch Keder oder seitliches Einrollen und Verkleben der Folie ermöglicht werden.

Dadurch entfällt das zeitaufwendige Befestigen der Verbindungsprofile durch Schrauben oder Nieten. Außerdem wird das Tragwerk nicht durch die dafür nötigen Löcher geschwächt und die Gefahr möglicher Undichtheit an diesen Stellen beseitigt. Das Verbindungsprofil liegt exakt parallel zum Tragwerksprofil. Das Anbringen des Verbindungsprofils kann durch Aufschieben oder durch Aufschnappen, je nach Form der hintergreifenden Verhakung, erfolgen.

Eine Ausführungsform, die besonders gut zum Aufschieben auf das Profil des Tragwerks geeignet ist, kann so gestaltet sein, daß das Verbindungsprofil in seiner Längserstreckung Nuten aufweist und das Profil der Tragwerkskonstruktion oder ein an dieser angeordnetes Profil an seiner zum Verbindungsprofil weisenden Seite hakenförmige Längsleisten besitzt, die in die Nuten des Verbindungsprofils eingreifen.

Falls eine außerordentlich hohe Wärmedämmung oder zusätzliche Verdunklung oder Beschattung gewünscht ist, zu deren Zweck mehrere Planen übereinander Tragwerk nötig sind, ist es erfindungsgemäß möglich, daß das an der Tragwerkskonstruktion angeordnete Profil oder Verbindungsprofil an seiner vom Tragwerk abgewandten Seite hakenförmige Längsleisten aufweist, die in die Nuten des an ihm angeordneten Verbindungsprofils eingreifen.

Ein Verfahren zur Durchführung der Befestigung kann so erfolgen, daß zuerst die Verbindungsprofile in den mit ihnen verhakenden Teil der Tragprofile am unteren Ende eingeschoben, zum Giebel hochgeschoben, über den Giebel gebogen, in das Tragprofil der anderen Seite eingeschoben und bis zu den unteren Enden dieser Tragprofile durchgezogen werden und daraufhin die Planen oder Folien mit ihren verdickten Trändern in die, diese umfassenden Ränder der Verbindungsprofile eingeschoben und über das Tragwerk gezogen werden.

Ein anderes mögliches Verfahren kann so sein, daß die Verbindungsprofile in die Profile des Tragwerkes eingeschoben und im Bereich des Giebels ein gebogenes Verbindungsprofil zwischen den Profilen des Tragwerkes zu den Verbindungsprofilen fluchtend eingesetzt wird und dann die Planen oder Folien mit ihren verdickten Rändern in die, diese umfassenden Ränder der Verbindungsprofile eingeschoben und über das Tragwerk gezogen werden.

Dieses Verfahren eignet sich besonders für steife Verbindungsprofile.

Die Erfindung wird anhand der nachstehenden Figuren erklärt.

Es zeigen:

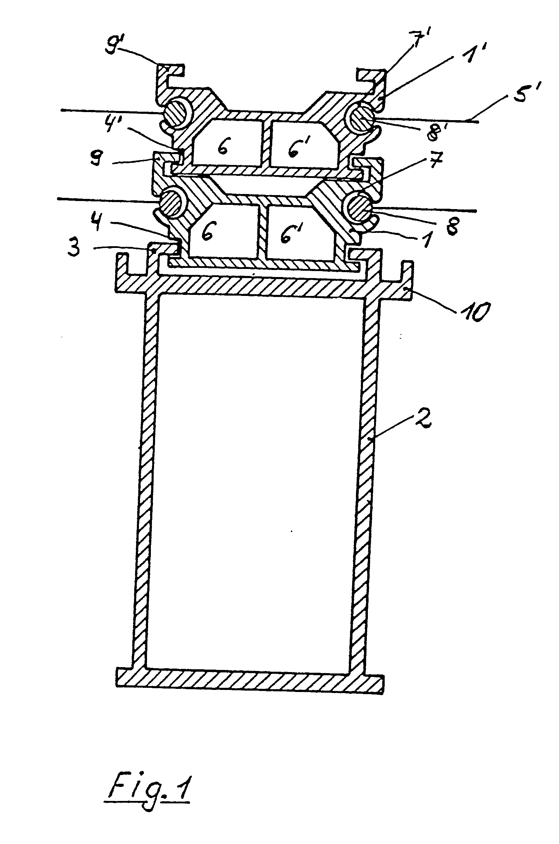

Fig. 1 eine erfindungsgemäße Befestigung im Schnitt normal zu seiner Längserstreckung.

Fig. 2 ein mit den erfindungsgemäßen Befestigungen ausgestattetes Gewächshaus.

Das Verbindungsprofil 1 ist auf das Tragwerksprofil 2 aufgeschoben und wird durch die hakenförmigen Längsleisten 3 des Tragwerksprofiles 2, die in die Nuten 4 des Verbindungsprofiles 1 eingreifen, gehalten. Auf dem Verbindungsprofil 1 ist das Verbindungsprofil 1′ angeordnet, das durch die hakenförmigen Längsleisten 9 des Verbindungsprofiles 1, die in die Nuten 4′ des Verbindungsprofiles 1′ eingreifen, in gleicher Weise gehalten. In den umfassenden Nuten 7 bzw. 7′ des Verbindungsprofiles 1 bzw. 1′, sind die mit jeweils einer Keder 8 versehenen Verdickungen der Plane 5 bzw. 5′ angeordnet. Zur besseren Wärmeisolierung, als auch aus Gewichts- und Steifigkeitsgründen, sind in den Verbindungsprofilen 1 bzw. 1′ die Hohlräume 6 bzw. 6′ angeordnet. Am Tragwerksprofil 2 sind am oberen Flansch seitliche Kondensationsleisten 10 ausgeführt, um von den Planen eventuell abtropfendes Kondensat abzuleiten.

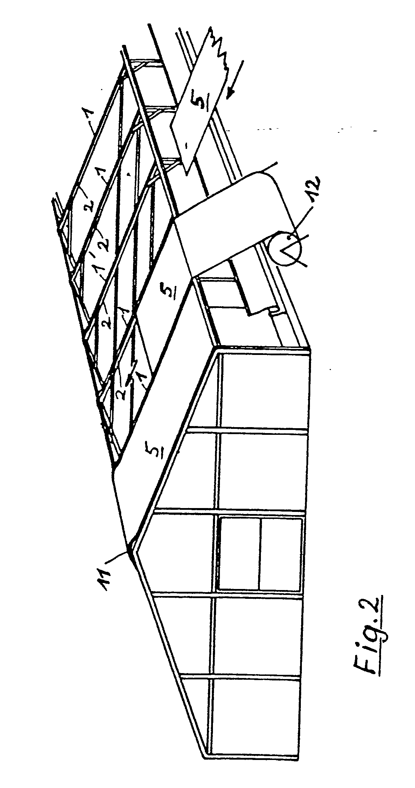

Fig. 2 zeigt ein Gewächshaus während des Aufbringens der Planen oder Folien. In einem Feld ist die Folie 5 bereits befestigt und mittels des gebogenen Verbindungsprofiles 11 über den Giebel gezogen. Im nächsten Feld wird die Folie 5 gerade von einer Rolle 12 abgespult und in den umfassenden Nuten 7 der Verbindungsprofile 1 hochgezogen. In den übrigen Feldern sind lediglich die Verbindungsprofile 1 auf den Tragwerksprofilen 2 aufgeschoben.

Zusätzlich wird die aufgeschobene Folie 5 in bekannter Weise durch Klemmleisten 13 in Traufenhöhe gegen ein ungewolltes Abziehen gesichert.

An den Stirnseiten und Seitenwänden des Gewächshauses ist die Folie in gleicher Weise angeordnet und durch Klemmleisten gesichert, wie an der Dachkonstruktion.

## Ansprüche

1. Befestigung für Planen oder Folien an Hallen, insbesondere Gewächshäusern, dadurch gekennzeichnet, daß zwischen parallel nebeneinander liegenden Planen oder Folien (5) ein Verbindungsprofil (1) angeordnet ist, das die zueinander weisenden, mit Verdickungen versehenen Ränder dieser Folien oder Planen (5) umfaßt und an der Außenseite eines Profiles (2) der Tragwerkskonstruktion, für die Planen oder Folien (5) oder an einem an diesem Profil angeordneten Profil in ihrer Längserstreckung miteinander hintergreifend verhaken.

2. Befestigung nach Anspruch 1, dadurch gekennzeichnet, daß das Verbindungsprofil in seiner Längserstreckung Nuten (4) aufweist und das Profil (2) der Tragwerkskonstruktion oder ein an dieser angeordneten Profil an seiner zum Verbindungsprofil weisenden Seite hakenförmige Längsleisten (9) besitzt, die in die Nuten (4) des Verbindungsprofiles eingreifen.

3. Befestigung nach einem der vorhergehenden Ansprüche, dadurch gekennzeichnet, daß das an der Tragwerkskonstruktion angeordnete Profil oder Verbindungsprofil (1) an seiner vom Tragwerk abgewandten Seite hakenförmige Längsleisten (9) aufweist, die in die Nuten (4′) des an ihm angeordneten Verbindungsprofil (1′) eingreifen.

4. Verfahren zur Befestigung von Planen oder Folien nach einem der vorhergehenden Ansprüche, dadurch gekennzeichnet, daß zuerst die Verbindungsprofile (1) in den mit ihnen verhakenden Teil der Tragprofile (2) am unteren Ende eingeschoben, zum Giebel hochgeschoben, über den Giebel gebogen, in das Tragprofil (2) der anderen Seite eingeschoben und bis zu den unteren Enden dieser Tragprofile (2) durchgezogen werden und daraufhin die Planen oder Folien (5) mit ihren verdickten Rändern in die, diese umfassenden Nuten (4) der Verbindungsprofile eingeschoben und über das Tragwerk gezogen werden.

5. Verfahren zur Befestigung von Planen oder Folien nach einem der vorhergehenden Ansprüche, dadurch gekennzeichnet, daß die Verbindungsprofile (1) in die Profile (2) des Tragwerkes eingeschoben und im Bereich des Giebels ein gebogenes Verbindungsprofil (11) zwischen den Profilen (2) des Tragwerkes zu den Verbindungsprofilen (1) fluchtend eingesetzt wird und dann die Planen oder Folien (5) mit ihren verdickten Rändern in die, diese umfassenden Nuten (7) der Verbindungsprofile (1) eingeschoben und über das Tragwerk gezogen werden.

_Fig.1_

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2080850 (SPANDREL ORBITS STRUCTURES) <br> * Seite 2, Zeile 96 - Seite 4, Zeile 108; Figuren 1-9 * | 1 | A01G9/14 |
| A | | 2-5 | |
| P,A | EP-A-306717 (IKEDA) <br> * Spalte 5, Zeile 38 - Spalte 6, Zeile 45; Figur 4 * | 1 | |
| A | US-A-2986150 (TORIAN) <br> * Spalte 2, Zeile 42 - Spalte 4, Zeile 72; Figuren 1-9 * | 1, 4 | |

**RECHERCHIERTE SACHGEBIETE (Int. Cl.5)**

A01G
F16B
E04H

Der vorliegende Recherchenbericht wurde für alle Patentansprüche erstellt

| Recherchenort | Abschlußdatum der Recherche | Prüfer |
|---|---|---|
| DEN HAAG | 27 MAERZ 1990 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument